# EUROPEAN PATENT APPLICATION

(11) **EP 1 782 878 A1**
(43) Date of publication of application: **09.05.2007**
(21) Application number: 05758211.6
(22) Date of filing: 06.07.2005
(51) Int. Cl.: B01D 46/02

(54) **BAG-TYPE AIR FILTER DEVICE, AND FILTRATION MATERIAL AND FILTRATION MATERIAL FRAME FOR THE DEVICE**

(30) Priority: 07.07.2004 JP 2004200457
(71) Applicant: Cambridge Filter Japan, Ltd., Tokyo 105-0001 (JP)
(72) Inventor: YAMAZAKI, Akira, Hiratsuka-shi, Kanagawa 254-0073 (JP); MURATA, Yuji, Sagamihara-shi, Kanagawa 229-0004 (JP); TAKIZAWA, Seiichi, Sagamihara-shi, Kanagawa 229-0034 (JP)
(74) Representative: Piésold, Alexander James
(86) International application number: PCT/JP2005/012474
(87) International publication number: WO 2006/004150

(57) **Abstract**

An air filter device (1) with a replaceable bag-type air filter medium is provided. The air filter device (1) comprises a bag-type air filter medium (2) having a fixing perimeter zone (7) defining an airflow inlet; an annular filter medium receiving member (4) having an annular cavity (13) for receiving the fixing perimeter zone of the air filter medium; and an elastically deformable filter medium holding member (5) disposed within the annular cavity and adapted to hold the fixing perimeter zone of the air filter medium between the filter medium receiving member and the filter medium holding member to fix the air filter medium and adapted to release the fixing perimeter zone of the air filter medium from the filter medium receiving member and the filter medium holding member.

## Description

### Field of the Invention

This invention relates to a bag-type air filter device, especially to a bag-type air filter device with a replaceable bag-type filter medium. This invention also relates to a filter medium and a filter medium holding frame used for the air filter device.

### Background of the Invention

Prior-art patent 1: JP, 7-13777, Y
Prior-art patent 2: JP, 49-101968, A
Prior-art patent 3: JP, 41-10942, B
Prior-art patent 4: JP, 42-5632, B

Prior-art patents 1, 2, and 3 disclose what is called a "bag-type" or "pocket-type" air filter device. In all air filter devices disclosed in these patents a bag-type air filter medium is fixed to a filter medium frame that defines an airflow inlet. Therefore, the whole device must be replaced when the air filter medium is replaced due to clogging. This causes high costs for replacement and transportation, since the whole device is replaced and transported.

Prior-art patent 1 teaches providing welded lines for the pockets by welding the parts of the inner surfaces of the pockets in lines to solve a problem in that when an airflow passes through the device the pockets are inflated and interfere with the adjacent pockets, resulting in reducing their filtering function. However, producing the continuous welded lines causes another problem in that when the bag is inflamed, the fire tends to spread along the welded lines and hence to bum the bag.

Prior-art patent 2 also teaches sewing the parts of the inner surface of each pocket to produce seam lines, which are similar to the welded lines of prior-art patent 1. However, producing the seam lines causes a problem in that it is not an efficient job and takes much time.

Prior-art patent 3 teaches fixing a cartridge of air filter medium to the filter medium frame with the rivets. This is the type to change the air filter medium (the cartridge) together with the frame, as discussed above.

Prior-art patent 4 discloses an air filter device, wherein the flange of the cartridge of filter medium is detachably attached to the flange of the angle frame by using a plurality of rotatable retainer rods, in place of fixing the filter medium to the filter medium frame with the rivets as in prior-art patent 3. In this device, the cartridge of filter medium can be detached for replacement. However, the device requires means for rotatably attaching these retainer rods to the angle frame, producing a problem in that the device must have a lot of elements and hence it becomes a complex mechanism. There is another

problems in the device in that since the retainer rods are not covered with the cartridge, the retainer rods, which act as handles when the cartridge is detached, tend to be tainted. Prior-art patent 4) also teaches supporting the cartridge at various parts (at its ridges and valleys) by wires. However, this structure becomes complex, resulting in a high producing cost.

### Summary of the Invention

This invention solves those problems discussed above. Therefore, the purpose of the invention is to provide an air filter device that allows an air filter medium to be attached to and detached from the filter medium frame of the device, and that has comparatively a simple structure so that it can be produced at a low cost.

To the above end, the air filter device of the present invention comprises a bag-type air filter medium having a fixing perimeter zone defining an airflow inlet; and a filter medium frame to which the air filter medium is attached to define the airflow inlet, including an annular filter medium receiving member having an annular cavity for receiving the fixing perimeter zone of the air filter medium and having a filter medium holding member disposed within the annular cavity and adapted to hold the fixing perimeter zone of the air filter medium between the filter medium receiving member and the filter medium holding member to fix the air filter medium and adapted to be elastically deformed to release the fixing perimeter zone of the air filter medium from the filter medium receiving member and the filter medium holding member.

The filter medium frame may have a plurality of parallel support rods extending between two opposing parts of the filter medium frame, for supporting the air filter medium from back at positions between the pockets of the medium.

The filter medium holding member of the air filter device or the filter medium frame may be formed to have a slit (space), a depression, and/or a notch between it and the filter medium receiving member when it is placed within the filter medium receiving member. A flat tool is inserted into the notch (or depression etc.) to push a resilient part of the filter medium holding member to disengage it from the air filter medium, to release the medium.

Instead of the slit, depression, notch, etc., or with at least one of them, the filter medium holding member of the air filter device or the filter medium frame may have an exposed projection (protruding portion). By pushing and rotating the projection, the resilient part of the filter medium holding member is rotated to be disengaged from the air filter medium, thereby releasing the medium.

Since the air filter medium is easily attached to and detached from the filter medium frame, the air filter medium is easily displaced, or, it can be cleaned and reused, and thus a cheap air filter device can be provided.

Further, since each support rod has a rod part (a central part) to be located upstream of its end portions in the airflow, the support rods can effectively support a bag-type air filter medium that has pockets.

Other features and the effects caused from them of this invention will be understood from the bellow-explained best mode for carrying out the inventions.

### Brief Description of the Drawings

Figure 1 is a perspective view of a first embodiment of the air filter device of the present invention, with a part of the device being fragmented.
Figure 2 is an enlarged sectional view of part II in Figure 1, showing an air filter medium held between a filter medium receiving member and an elastic filter medium holding member.
Figure 3 is a side view of a filter medium frame taken in the direction of arrow III in Figure 1 (an air filter medium is omitted).
Figure 4 is a cross-sectional view of a second embodiment of the air filter device of the present invention

### The Best Mode for Carrying out the Invention

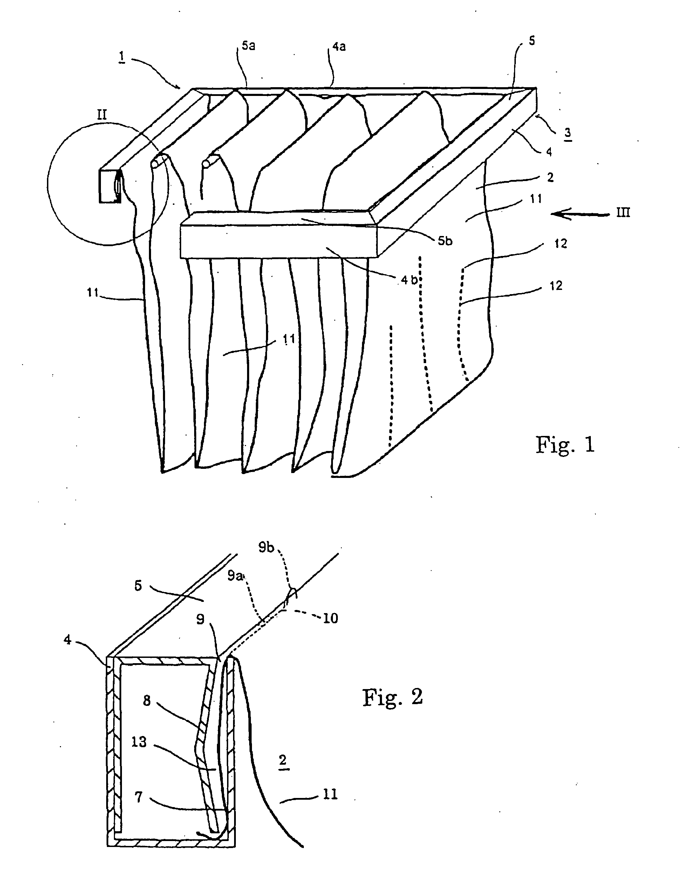

Figure 1 is a partly fragmental perspective view of a preferable embodiment of the air filter device of the present invention. The air filter device 1 of this embodiment includes a bag-type air filter medium 2 and an annular filter medium frame 3 to which the air filter medium 2 is attached.

The filter medium frame 3 defines an airflow inlet, into which an airflow to be filtered flows, in the inside space surrounded by the annular frame. The filter medium frame 3 includes an annular filter medium receiving member 4 having a cavity 13 (groove) for receiving the air filter medium 2, and a filter medium holding member 5 disposed within the filter medium receiving member 4, for fixing the air filter medium 2 received in the cavity.

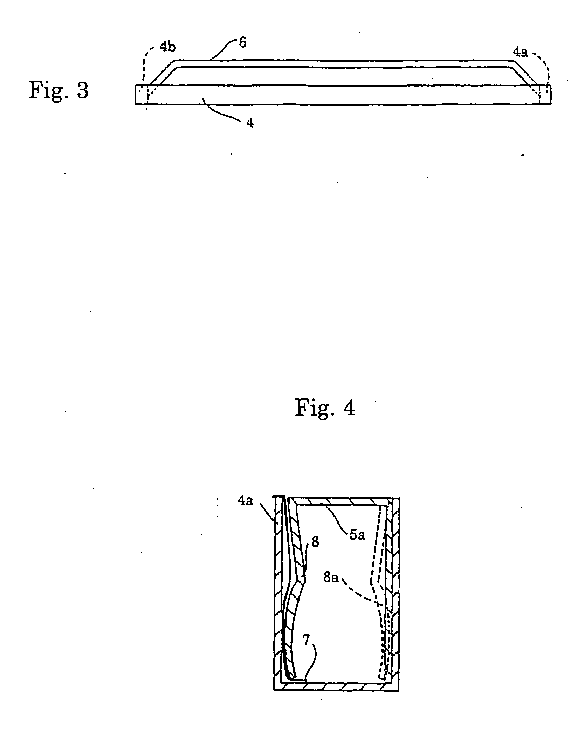

Although in this embodiment the air filter medium 2 has a plurality of pockets 11, 11, it may have a single pocket 11. The filter medium frame 3 may include a plurality of support rods 6, 6 extending between two opposed parts 4a and 4b of the frame 3. These support rods 6, 6 are arranged substantially in parallel to support the pockets 11, 11 of the air filter medium 2 from back at positions between those pockets. As shown in Figures 1 and 3, in the embodiment each support rod 6 is directly welded at its ends to the upper parts (i.e., the upstream parts) of the inner faces of the opposing parts 4a and 4b of the filter medium receiving member 4 (the inner surface of the annular frame). Alternatively, each rod 6 may be fixed at its end portions to a bracket (not shown) secured to the inner surface of the opposing parts 4a and 4b so that the rod extends between the opposing parts through the bracket.

Though the filter medium frame 3 is a rectangle in the illustrated example, it may be a circle. Accordingly, the bag-type air filter medium 2 may be formed to have a round airflow inlet.

In Figure 1, a part of filter medium frame 3 and a part of the air filter medium 2 (at one corner of the frame, shown by circle II) is fragmentarily illustrated. Figure 2 shows this fragmental part, i.e., it shows in detail the air filter medium 2 engaging with the filter medium frame 3.

In Figure 2, the filter medium receiving member 4 is formed from a channel. The channel is made from, for example, stainless steel, and can be produced by bending a stainless steel plate. By welding four stainless channel members at their ends, or by joining them with any known method, an integral filter medium receiving member of a channel-shaped cross section is produced. The four channel members may not be jointed if they are secured to a wall, etc. The filter medium receiving member 4 is directed so that the open face of the channel member faces against the airflow. Alternatively, the filter medium receiving member 4 may be made of other material, for instance, plastic. The filter medium holding member 5 is generally shaped as a channel, and it has a bent or curved side 8. The bent or curved side 8 can be resiliently deformed so as to work as a spring, i.e., an elastically resilient member. The filter medium holding member 5 is also produced from a stainless steel plate by bending it, or it can be made from plastic or other material. It may be any plastic that is not elastic, if it has a side 8 functioning as an elastically resilient side (elastically deforming part) 8. The filter medium holding member 5 may be a bar of rubber, which itself is a elastic material having a circular, trapezoidal, or any other suitable cross section. If the filter medium holding member 5 is made as the bar of rubber, the space between the bar of rubber and filter medium receiving member 4 is a slit 9 (it will be explained below in detail).

The filter medium holding member 5 may be fixed in the cavity 13 of the filter medium receiving member 4, or it may be detachably disposed in the cavity 13.

As shown in Figure 2, the filter medium holding member 5 is disposed in the filter medium receiving member 4 so that the opened part of the channel of the filter medium holding member 5 faces downward as in Figure 1 and Figure 2. The filter medium holding member 5 and the filter medium receiving member 4 sandwiches the all peripheral sides or peripheral zone 7 of the air filter medium 2 between them, to fix the air filter medium 2 to the filter medium frame 3. The filter medium holding member 5 is properly sized so that a small slit 9 is formed between the upper part of the elastically deforming part 8 and the filter medium receiving member 4. A flat tool like the flat chip of a screw driver is inserted in the slit 9 to push the deforming part 8 toward the radially outside direction, to deform it to remove the air filter medium 2 from the filter medium frame 3 by taking or without taking the filter medium holding member 5 out of the filter medium receiving member 4.

In Figure 2, a short dashed line denoted by the number 10 shows the radially inner edge of the filter medium holding member 5 when it is sized so that no slit 9 is formed. At least one notch or depression 9a, which functions the same as the slit 9, may be formed in the edge of the filter medium holding member 5, instead of the slit 9. Further, at least one projection 9b, which functions as similar to the slit 9, may be formed on the edge of the filter medium holding member 5, instead of the slit 9. By pushing the projection 9b to rotate it clockwise in Figure 2, thereby to rotate the elastically deforming part 8 in the radially outside direction, the air filter medium 2 can be detached from the filter medium frame. Clearly, all of one or more of slits 9, one or more of notches 9a, one or more of depressions 9a, and one or more of projections 9b, or any combination of them may be provided.

Referring back to Figure 3, the parts of the air filter medium 2 in Figure 1 having the pockets and the peripheral zone 7 protruding from the mouths of the pockets, which parts are located between the pockets, may protrude from the front face of filter medium frame 3. To support the parts between the pockets contributes to effectively support the air filter medium2. Thus, for the purpose of it, the plurality of parallel support rods 6 are provided. In the example shown in Figure 3, each support rod is secured at its ends to the upper portions of the inner faces of the opposing parts 4a and 4b (i.e., the portions nearer the airflow inlet) of the filter medium receiving member 4. Each fixed end portion, which has the angle of 45° relative to the front face of the filter medium receiving member, has a short length and continues to a central portion (a support rod portion), which has the angle of 135° relative to the fixed end portion. Thus, the central portion (the support rod portion), which is the remaining part of the support rod 6, excluding both end portions, is parallel to the front face of the filter medium receiving member 4. As shown, the support rod portions may project from the front face of the filter medium frame 3 (the filter medium receiving member 4). The degree of the projection may be arbitrarily selected depending on the size of the air filter medium 2, the properties of its material, the number of the pockets, the sizes of the elements of the air filter device, etc.

Figure 4 is a sectional view that shows another example of the filter medium holding member 5 used for the air filter device 1 or the filter medium frame 3 of the present invention. The sectional view corresponds to the section viewed along the line that passes through the opposing parts 4a, 4b of the filter medium receiving member 4 and the opposing parts 5a, 5b of the filter medium holding member 5, shown in Figure 1. (Since the section is symmetry, the left part, 4b, 5b, is omitted, and only the right part, 4a, 5a, is shown together with the air filter medium 2.) Clearly from Figure 4, the elastically deforming part 8 of the filter medium holding portion 5 (its portion 5a) disposed within the annular cavity of the filter medium receiving member 4 (its portion 4a) has a bent portion and a curbed portion located below the bent portion. A portion of the filter medium holding portion 5 that opposes the elastically deforming part 8 is straight as shown by the solid lines.

Though the examples of the shapes of the elastically deforming part 8 are illustrated in Figure 2 and Figure 4, it is clear for a person skilled in the art that various modifications can be made. For example, the filter medium holding member 5 may be symmetrical so that it has the elastically deforming part 8 shown in Figure 4 at one side and a similar elastically deforming part 8a (shown by the dashed lines) at the other side. The symmetrically member 5 is placed in the filter medium receiving member without considering its orientation, eliminating the error of placing it in a wrong direction.

The present invention can use any material for the air filter medium 2 that can be folded and that has a filtering power. It is preferably a weldable material. For instance, synthetic fiber unwoven cloth is preferable. When the synthetic fiber unwoven cloth is used, a bag-type air filter medium with pockets 11, 11, shown in Figure 1, is easily formed from that cloth, and the welding lines taught in the prior-art patent 1 may also formed, by using a well-known technology such as an ultrasonic wave sewing machine or a high-frequency sewing or welding machine.

In the embodiment of the present invention, the continuous welding lines taught in the prior-art patent 1 are not used for the air filter medium 2, sine a flame easily spreads along the continuous lines. In the embodiment of the present invention, successive welding points 12, 12 are provided on the air filter medium 2. It was found that if the welding points 12, 12 are spaced 5mm or more, and if the area of each welding point is 5 mm² or less, the air filter medium will be flame resistant. The air filter medium 2 of this invention, configured as above, was tested under the JIS L 1091 A-2 flame-resistant method. The medium 2 was classified as class 2. Further, it is also found that by assuming the configuration, the pockets of the medium 2 become more flexible than the conventional air filter medium..

Though this invention has been described for the embodiment and some examples, the embodiment and the examples are just exemplary, and the present invention is not limited to them. It is clear for a person skilled in the art that other various modifications and changes can be made. This invention is intended to include such modifications and changes without departing from the spirit of the invention.

### Industrial Applicability

The air filter device, the filter medium frame, and the filter medium of this invention can allow the air filter medium of the air filter device to be easily replaced, reducing the cost for the air filter device and the cost for transporting it, and can provide a cheap air filter device and air filter medium. Therefore, it can satisfy the demand of the industry, and it can be used in the industry.

## Claims

1. An air filter device (1) comprising:
a bag-type air filter medium (2) having a fixing perimeter zone (7) defining an airflow inlet; and
a filter medium frame (3) to which the air filter medium is attached to define the airflow inlet, including an annular filter medium receiving member (4) having an annular cavity (13) for receiving the fixing perimeter zone of the air filter medium and having a filter medium holding member (5) disposed within the annular cavity and adapted to hold the fixing perimeter zone of the air filter medium between the filter medium receiving member and the filter medium holding member to fix the air filter medium and adapted to be elastically deformed to release the fixing perimeter zone of the air filter medium from the filter medium receiving member and the filter medium holding member.

2. The air filter device of claim 1, wherein the air filter medium includes a plurality of pockets (11, 11), and the annular filter medium receiving member (4) includes a plurality of parallel support rods (6,6) extending between two opposing parts (4a, 4b) of the filter medium receiving member, for supporting air filter medium (2) from back thereof at positions between the pockets (11, 11).

3. The air filter device of claim 2, wherein each support rod (6) has end portions secured to inner faces of the two opposing parts (4a, 4b) and a central portion, which is a remaining part of the support rod other than the end portions, and the central portion of the support rod is adapted to be located upstream of the end portions in the airflow.

4. The air filter device of claim 1, wherein the filter medium holding member (5) is shaped so that a slit (9) is produced between the filter medium holding member and the filter medium receiving member to allow a tool to be inserted in the slit for elastically deforming the filter medium holding member (5) disposed in the filter medium receiving member (4).

5. The air filter device of claim 1, wherein the filter medium holding member (5) has at least one of i) a notch (9a) and ii) a depression (9a) to allow a tool to be inserted therein for elastically deform the filter medium holding member (5) disposed in the filter medium receiving member (4) to release the air filter medium and iii) a projection (9b) for elastically deforming the filter medium holding member.

6. The filter medium frame (3) used for the air filter device of claim 2, including an annular filter medium receiving member (4) having an annular cavity (13) for receiving the fixing perimeter zone of the air filter medium and having a filter medium holding member (5) disposed within the annular cavity and adapted to hold the fixing perimeter zone of the air filter medium between the filter medium receiving member and the filter medium holding member to fix the air filter medium and adapted to be elastically deformed to release the fixing perimeter zone of the air filter medium from the filter medium receiving member and the filter medium holding member.

7. The filter medium frame (3) of claim 6, wherein the annular filter medium receiving member (4) includes a plurality of parallel support rods (6,6) extending between two opposing parts (4a, 4b) of the filter medium receiving member, for supporting air filter medium (2) from back thereof at positions between the pockets (11, 11), each support rod (6) having end portions attached to inner faces of the two opposing parts (4a, 4b) and a central portion, which is a remaining part of the rod other than the end portions, and wherein the central portion of the rod is adapted to be located upstream of the end portions in the airflow..

8. A bag-type air filter medium (2) used for the air filter device of claim 1, the air filter medium being made of weldable material and having at least one pocket (11), wherein opposing parts of an inner surface of the pocket are mutually welded at a plurality of successive welding points (12) in the inner surface, and an area of each welding point is equal to or less than 5 mm², and a spacing of the welding points is equal to or more than 5 mm.
